# EUROPÄISCHE PATENTSCHRIFT

(11) **EP 3 038 020 B1**
(45) Veröffentlichungstag und Bekanntmachung des Hinweises auf die Patenterteilung: **07.12.2016**
(21) Anmeldenummer: 14199578.7
(22) Anmeldetag: 22.12.2014
(51) Int. Cl.: G06K 19/00

(54) **Verfahren zur Abfrage eines Verschlusszustands und/oder Aufenthaltsorts eines verschließbaren Behälters**
Method for interrogating a closure state and/or location of a container that can be locked
Procédé d'interrogation d'un état de fermeture et/ou d'un emplacement d'un récipient refermable

(43) Veröffentlichungstag der Anmeldung: 29.06.2016
(73) Patentinhaber: Smartrac IP B.V., 1077 XX Amsterdam (NL)
(72) Erfinder: Huhtasalo, Lauri Johannes, 10330 Bangkok (TH); Wittkowski, Joerg Stefan, 47475 Kamp-Lintfort (DE)
(74) Vertreter: advotec.

(56) Entgegenhaltungen:
- EP-A1- 1 375 131
- JP-A- 2010 263 404
- US-A1- 2005 162 277
- US-A1- 2008 309 495

## Beschreibung

Die vorliegende Erfindung betrifft ein Verfahren zur Abfrage des Verschlusszustands und/oder des Aufenthaltsorts eines Behälters.

Aus dem Stand der Technik sind gattungsgemäße Behälter beispielsweise als Umverpackungen für Waren bekannt. Dabei werden die bekannten Behälter mit einem RFID-Chip und einer mit diesem verbundenen Antenne versehen, so dass mittels der Antenne Signale und darüber auch Energie im Radiofrequenzbereich empfangen werden können bzw. kann, die empfangene Energie zur Generierung eines entsprechenden Antwortsignals mittels des RFID-Chips genutzt wird und dieses Antwortsignal die bidirektionale Kommunikation mit einem Schreib-/Lesegerät ermöglicht. Die Antennen sind dabei in gängigen Technologien derart auf die RFID-Chips abgestimmt, dass eine Kommunikation mit einem Schreib-Lesegerät in jeweils spezifischen Frequenzbereichen, wie beispielsweise dem Ultrahochfrequenzbereich oder dem Mikrowellenfrequenzbereich (UHF- oder SF-Frequenzbereich) möglich ist. Die Kombination aus RFID-Chip und Antenne wird dabei gängigerweise als RFID-Tag oder RFID-Transponder bezeichnet, wobei RFID für "Radio Frequency Identification" steht.

In gattungsgemäßen Verfahren werden derartige Behälter zusammen mit externen Schreib-/Lesegeräten, auch Sende- und/oder Empfangseinheiten genannt, verwendet. Dabei wird in aller Regel mittels der Sendeinheit ein Signal generiert und ausgesendet, das von den entsprechenden Antennen der Behälter aufgenommen wird, woraufhin ein entsprechendes Antwortsignal generiert wird. Diese Antwortsignale der Behälter bzw. der mit den Behältern verbundenen Antennen werden von entsprechenden Empfangseinheiten aufgenommen und gegebenenfalls weiterverarbeitet.

Entsprechende Behälter und Verfahren unter Einsatz derartiger Behälter eignen sich zum Beispiel als Diebstahlschutz von Gegenständen. Genauso gut können die bekannten Behälter und die entsprechenden Verfahren auch im Bereich der Logistik oder anderen Bereichen eingesetzt werden, um mittels einer entsprechenden Positionierung der Sende- und/oder Empfangseinheiten den Aufenthaltsort des Behälters bzw. das Passieren eines bestimmten Bereichs festzustellen.

Aus der Japanischen Offenlegungsschrift JP2010263404A ist ein Behälter zur Aufnahme von Waren mit daran befestigten RFID-Chips bekannt. Zur Reichweitenvergrößerung für die kontaktlose Erfassung der RFID-Chips ist an dem Behälter eine Boosterantenne befestigt. Die US-Offenlegungsschrift US2008309495A1 beschreibt einen Behälter mit einem abnehmbaren Deckel, wobei an dem abnehmbaren Deckel, jedoch physisch getrennt von dem RFID-Chip und dessen Antenne, ebenfalls eine Boosterantenne angebracht ist.

Nachteilig an den bekannten Vorrichtungen und Verfahren ist allerdings, dass diese zwar den Ort des entsprechenden Behälters bestimmen oder zumindest eingrenzen, aber keine Aussage über den Zustand des Behälters machen können. Jedoch sind in besonders vielen Anwendungen verschließbare Behälter im Einsatz, bei denen neben dem Aufenthaltsort des Behälters auch der Verschlusszustand bzw. die Unterscheidung zwischen einer geöffneten Stellung des Behälters und einer geschlossenen Stellung des Behälters sowie der mehrmalige Übergang zwischen den beiden Zuständen von besonderem Interesse für die Handhabung und Anwendung der in den jeweiligen Behältern befindlichen Waren und Gegenstände sowie für die Anwendung der oben bereits skizzierten Verfahren ist. Dies gilt beispielsweise, aber keineswegs ausschließlich, für Behälter, in denen verderbliche oder anderweitig in ihrer Haltbarkeit eingeschränkte Güter und Waren aufbewahrt werden, sowie für Behälter, die neben einer Verpackungsfunktion gleichzeitig auch eine Diebstahlsicherungsfunktion erfüllen sollen.

Im Bereich der Diebstahlsicherung ist es darüber hinaus auch bekannt, nicht die Verpackung bzw. den Behälter, in dem sich eine Ware befindet, mit einem entsprechenden RFID-Chip samt Antenne zu bestücken, sondern das RFID-Tag direkt an der Ware anzubringen. Dies hat jedoch den Nachteil, dass Sicherungsvorrichtungen leicht erkennbar sind und zudem die gewollte einfache Entfernung der Tags nach einem Kauf mit der gewollt schwierigen Entfernung der Tags im Vorfeld eines beabsichtigten Diebstahls im Widerspruch steht. Außerdem wird die optische Produktpräsentation durch das Anbringen von RFID-Chips und damit verbundener Antenne auf der Ware selbst nachteilig beeinflusst.

Dementsprechend ist es die Aufgabe der vorliegenden Erfindung, die bekannten Verfahren derart weiterzubilden, dass mittels der Behälter und deren Einsatzes in entsprechenden Verfahren neben dem Aufenthaltsort auch die mehrfach veränderliche Verschlussstellung einfach und zuverlässig erkannt werden kann.

Diese Aufgabe wird mit dem Verfahren gemäß dem unabhängigen Anspruch 1 gelöst. Vorteilhafte Ausführungen des Verfahrens sind Gegenstand der Unteransprüche.

Die erfindungsgemäße Grundidee sieht vor, dass der RFID-Chip mit einer damit verbundenen ersten Antenne, im folgenden Nahfeldantenne genannt, an einem ersten oder zweiten Behälterteil angeordnet ist und zusätzlich eine zweite Antenne, im folgenden Fernfeldantenne genannt, mit dem jeweils anderen Behälterteil verbunden ist, wobei der erste und der zweite Behälterteil so zueinander am Behälter angeordnet sind, dass die Behälterteile beim Öffnen bzw. beim Schließen des Behälters, also bei einem Übergang von einer geöffneten Stellung zu einer geschlossenen Stellung bzw. umgekehrt, einer Relativbewegung zueinander unterworfen sind. Dabei ist die Anordnung des RFID-Chips mit verbundener Nahfeldantenne und der Fernfeldantenne am jeweiligen Behälterteil so ausgeführt, dass in der geschlossenen Stellung des Behälters eine kontaktlose elektromagnetische Kopplung zwischen der Nahfeldantenne und der Fernfeldantenne auftritt. Die kontaktlose elektromagnetische Kopplung kann beispielsweise über eine kapazitive Kopplung, eine induktive oder eine gemischt kapazitive und induktive Kopplung erreicht werden.

Auf diese Weise wird erreicht, dass in der geschlossenen Stellung des Behälters und der resultierenden kontaktlosen elektromagnetischen Kopplung zwischen der Nahfeldantenne und der Fernfeldantenne eine deutliche Verbesserung der Reichweite für die Kommunikation mit mindestens einer Sende- und/oder Empfangseinheit erreicht wird. Mit anderen Worten ausgedrückt bedeutet dies, dass die Fernfeldantenne als "Reichweitenverbesserer" bzw. "Booster" wirkt, jedoch nur wenn die räumliche Anordnung zu einer mit dem RFID-Chip verbundenen Nahfeldantenne so ist, dass eine kontaktlose elektromagnetische Kopplung gegeben ist. Dementsprechend wird eine von der Reichweite der Kommunikation mit mindestens einer Sende- und/oder Empfangseinheit abhängige Unterscheidung der Verschlussstellung des Behälters möglich. Ebenfalls kann eine Reichweitenanpassung auch über Art, Größe und Ausbildung der elektromagnetisch koppelnden Fernfeldantenne erreicht werden.

Ganz besonders vorteilhaft ist dabei, dass die Wechselwirkung bzw. die kontaktlose elektromagnetische Kopplung zwischen der Fernfeldantenne und der Nahfeldantenne mehrfach hergestellt und wieder unterbunden bzw. unterbrochen werden kann. Dies bedeutet, dass nicht nur ein erstmaliges Öffnen des Behälters, sondern auch ein daran anschließendes Wiederverschließen und dementsprechend auch weitere darauffolgende Öffnungs- und Verschlussvorgänge die kontaktlose elektromagnetische Kopplung der Fernfeldantenne und der Nahfeldantenne jeweils herstellen oder unterbinden. Besonders vorteilhaft ist es dabei, wenn der erste Behälterteil als Körper und der zweite Behälterteil als Deckel des Behälters ausgestaltet sind. Alternativ kann zudem vorgesehen sein, dass es sich bei dem ersten und zweiten Behälterteil um zwei komplementäre Verschlusselemente des Behälters handelt. So haben beispielsweise Butterfly-Verschlüsse, Bolzenverschlüsse, (Dreh-)Riegelverschlüsse und vergleichbare Verschlüsse jeweils zwei komplementäre Verschlusselemente, die sich bei der entsprechenden Verwendung an verschließbaren Behältern wie von der vorgeschlagenen Lehre vorgesehen beim Übergang zwischen geöffneter und geschlossener Stellung des Behälters relativ zueinander bewegen und des Weiteren durch mechanische Mittel insbesondere die geschlossene Stellung des Behälters sichern bzw. wahren. Dies hat den besonderen Vorteil, dass solche Behälterteile gerade in der geschlossenen Stellung eine wohldefinierte Position zueinander einnehmen, wodurch die kontaktlose elektromagnetische Kopplung zwischen Nahfeldantenne und Fernfeldantenne sicher und zuverlässig erzeugt bzw. herbeigeführt werden kann.

Weiter ist es ebenfalls vorteilhaft, wenn ein entsprechender Behälter zusätzlich oder alternativ Führungsmittel aufweist, die die mögliche Relativbewegung der Behälterteile bei Übergang zwischen der geschlossenen Stellung und der geöffneten Stellung oder zumindest die Relativanordnung der Behälterteile in der geschlossenen Stellung vorgibt. Dadurch kann ebenfalls die zur Herstellung der kontaktlosen elektromagnetischen Kopplung benötigte relative Anordnung zwischen der Fernfeldantenne und der Nahfeldantenne in der geschlossenen Stellung des Behälters zuverlässiger gewährleistet werden.

Zudem ist es besonders wünschenswert, wenn der Behälter aus Papier, Karton oder Verbundmaterial umfassend zumindest Papier und/oder Karton besteht. An derartigen Behältern lassen sich sowohl die vorgesehenen RFID-Chips mit verbundenen Nahfeldantennen als auch die Fernfeldantennen besonders gut anbringen oder sogar einbringen. Des Weiteren ist derartiges Material besonders gut geeignet, da es in vielen Bereichen als Umverpackung von teilweise hochwertigen und kleinen Gütern Anwendung findet, für die im Rahmen eines effektiven Diebstahlschutzes auch die Abfrage bzw. die Überwachung einer Verschlussstellung des Behälters neben der Ortsbestimmung von besonderem Interesse ist.

Für dieses oder anderes Behältermaterial ist es zudem besonders wünschenswert, wenn die Fernfeldantenne und/oder die Nahfeldantenne als Resultat eines Druckvorgangs an dem Behälterteil bzw. den Behälterteilen angeordnet sind. Mittels an sich bekannten Druckverfahren beispielsweise unter Einsatz von elektrisch leitfähigen Druckpasten können Antennen schnell, und zuverlässig an den Behälterteilen angeordnet werden.

Außerdem kann eine besonders vorteilhafte Behälterausführung erreicht werden, wenn einer der beiden Behälterteile eine Lasche aufweist oder gar als Lasche ausgebildet ist. Beispielsweise sind bei Umverpackungen Einstecklaschen, die gegebenenfalls selbst wieder von anderen Laschen gesichert bzw. durchgriffen werden, besonders weit verbreitet. Ein besonderer Vorteil derartiger Laschen besteht darin, dass bei dem Übergang zwischen geöffneter Stellung und geschlossener Stellung des Behälters die Laschen zu den verbleibenden Behälterteilen eine wohldefinierte Position einnehmen. Dies gilt ganz besonders für die geschlossene Stellung des Behälters. Dementsprechend ermöglicht eine Positionierung des RFID-Chips mit der damit verbundenen Nahfeldantenne oder der Fernfeldantenne an bzw. auf oder in einer solchen Lasche, dass in der geschlossenen Stellung des Behälters die notwendige Präzision bei der Relativanordnung der Nahfeldantenne zur Fernfeldantenne einfach und sicher gewährleistet wird.

Weiterhin ist es vorteilhaft, wenn der RFID-Chip mit der damit verbundenen Nahfeldantenne und die Fernfeldantenne jeweils so mit dem ersten und zweiten Behälterteil verbunden sind, dass sie in der geschlossenen Stellung des Behälters im Inneren des Behälters angeordnet sind. Dadurch wird einerseits ermöglicht, dass die Fernfeldantenne und die mit dem RFID-Chip verbundene Nahfeldantenne optisch am Äußeren des Behälters nicht zu erkennen sind, was insbesondere im Rahmen einer Verwendung der Behälter für den Diebstahlschutz besonders vorteilhaft ist. Andererseits wird jedoch auch sichergestellt, dass bei der gebrauchsüblichen Verwendung der Behälter die Fernfeldantenne, die Nahfeldantenne und der RFID-Chip nicht durch mechanische oder andere äußere Einflüsse beschädigt werden.

Die oben genannte Aufgabe wird, insbesondere mittels eines Behälters wie vorstehend beschrieben, durch ein Verfahren zur Abfrage einer Verschlussstellung von zumindest einem verschließbaren Behälter gelöst, welches die folgenden Verfahrensschritte umfasst:
das Senden eines Signals mittels zumindest einer Sendeeinheit; das Empfangen des Signals durch eine mit einem RFID-Chip verbundene Nahfeldantenne an einem ersten oder zweiten Behälterteil des Behälters; das Generieren eines Antwortsignals durch den RFID-Chip; die Übertragung des Antwortsignals zu mindestens einer Empfangseinheit, wobei in einer geschlossenen Stellung des Behälters eine kontaktlose elektromagnetische Kopplung zwischen der Nahfeldantenne des RFID-Chips und einer mit dem jeweils anderen ersten oder zweiten Behälterteil verbundenen Fernfeldantenne besteht und das Antwortsignal zur Kommunikation mit einer Sendeeinheit mit einer ersten Reichweite von der Fernfeldantenne übertragen wird und in einer geöffneten Stellung des Behälters das Antwortsignal von der mit dem RFID-Chip verbundenen Nahfeldantenne mit einer zweiten Reichweite zur Kommunikation mit einer Sendeeinheit übertragen wird; und das anschließende Überprüfen des Empfangs von Antwortsignalen mittels zumindest einer Empfangseinheit.

Das vorgeschlagene Verfahren stellt dabei sicher, dass der Empfang von Antwortsignalen für jede einzelne Empfangseinheit sowohl von der räumlichen Position des Behälters als auch von der die Reichweite des Antwortsignals bestimmenden Verschlussstellung des Behälters abhängt. Folglich kann mit einer jeweils vorteilhaft angepassten Anordnung von mehreren Empfangseinheiten die Bewegung bzw. der Aufenthaltsort der Behälter abgefragt und zudem die Verschlussstellung ermittelt werden.

Besonders vorteilhaft kann das Verfahren ausgeführt werden, wenn die oben genannten Verfahrensschritte periodisch wiederholt bzw. ununterbrochen wiederholt werden, wobei insbesondere mittels einer zumindest mit einer Empfangseinheit verbundenen Datenverarbeitungsanlage eine zeitliche Veränderung der Antwortsignale erfasst und insbesondere gespeichert wird.

Dabei ist es besonders wünschenswert für das Verfahren, dass die mittels des RFID-Chips generierten Antwortsignale als charakteristische Antwortsignale eines jeweiligen Behälters oder zumindest eines jeweiligen Behältertyps generiert werden. Dies kann durch eine entsprechende Ausgestaltung des RFID-Chips sowohl auf Hardwareseite als auch durch eine entsprechende Programmierung sichergestellt werden. Die Individualisierung der Antwortsignale erleichtert bzw. ermöglicht die einwandfreie Zuordnung von Antwortsignalen an der bzw. an den jeweiligen Empfangseinheiten zu einem Behälter oder einer Behälterklasse und erleichtert damit die Erfassung der zeitlichen Veränderung der Antwortsignale sowie deren Speicherung.

Zudem kann das erfindungsgemäße Verfahren besonders dadurch weitergebildet werden, dass die Datenverarbeitungsanlage die zeitliche Veränderung der Antwortsignale auswertet und basierend auf der Auswertung eine Prognose über den Aufenthaltsort und/oder die Verschlussstellung des zumindest einen Behälters für einen aktuellen und/oder einen zukünftigen Zeitpunkt erstellt.

Eine derartige Weiterbildung kann ebenfalls eng mit der den jeweiligen Behältern und mit der an die entsprechende Umgebung angepassten Positionierung der Empfangseinheiten verknüpft sein. Die Ausgestaltung wird zudem dadurch ermöglicht, dass neben der entsprechenden Anordnung von Empfangseinheiten auf der Datenverarbeitungsanlage Algorithmen zur Anwendung kommen, welche die empfangenen Antwortsignale verarbeiten und mit entsprechend großer Wahrscheinlichkeit bzw. sogar mit Sicherheit feststellen, ob ein Behälter die Position bzw. den Aufenthaltsort ändert, geändert hat oder wahrscheinlich ändern wird und ob der entsprechende Behälter gleichzeitig bzw. ohne Veränderung des Aufenthaltsorts geöffnet bzw. geschlossen wurde, geöffnet bzw. geschlossen ist oder wahrscheinlich geöffnet bzw. geschlossen wird.

Das Verfahren kann weiter auch so ausgestaltet sein, dass die Abfrage und/oder Prognose bezüglich des Aufenthaltsorts oder der Verschlussstellung des zumindest einen Behälters über eine Ausgabeeinheit der Datenverarbeitungsanlage ausgegeben wird. Damit wird ein Benutzer bzw. ein Bediener des entsprechenden Verfahrens in einfacher beispielsweise optischer oder akustischer Weise über die aktuelle bzw. zukünftige Veränderung von Verschlussstellung oder Aufenthaltsort des Behälters bzw. der Behälter informiert.

Entsprechend einer zusätzlichen Weiterbildung des Verfahrens ist vorgesehen, dass das Senden der Signale und der Empfang der Antwortsignale mit zumindest einer kombinierten Sende- und Empfangseinheit erfolgt. Dadurch lässt sich das Verfahren mit einem reduzierten Aufwand an benötigten Einrichtungen bzw. Vorrichtungen ausführen.

Weiterhin kann vorteilhaft vorgesehen sein, dass die Antwortsignale mit der ersten Reichweite eine größere Reichweite erreichen als die Antwortsignale mit der zweiten Reichweite. Die entsprechende Reichweitenanpassung hat mehrere Vorteile. Zunächst kann der RFID-Chip einfacher ausgestaltet sein, da in Abhängigkeit der Verschlussstellung des Behälters keine unterschiedlichen Antwortsignale generiert werden müssen, sondern nur ein einheitliches Antwortsignal generiert und entsprechend übertragen werden muss.

Des Weiteren kann die unterschiedliche Reichweite eine besonders vorteilhafte und strategische Anbringung von Empfangseinheiten ermöglichen, beispielsweise an Orten bzw. in Umgebungen, in denen eine Veränderung der Verschlussstellung, also eine Öffnung oder ein Verschließen, erwartet wird oder aber besonders kritisch ist. Beispielsweise kann vorgesehen sein, dass die Reichweite des Antwortsignals, wenn es über die Fernfeldantenne übertragen wird und sich der Behälter dementsprechend in einer geschlossenen Stellung befindet, etwa 5 bis 10 Meter beträgt. Für eine geöffnete Stellung des Behälters und eine daraus resultierende Übertragung des Antwortsignals mittels der mit dem RFID-Chipmodul verbundenen Nahfeldantenne kann es vorgesehen sein, dass eine Reichweite von weniger als 1 Meter erreicht wird.

Ganz allgemein kann vorteilhaft vorgesehen sein, dass der Unterschied zwischen den Reichweiten in Abhängigkeit von der Verschlussstellung des Behälters einen Faktor 5 bis 100 ergeben kann. Die jeweilige Anpassung des Verhältnisses der Reichweiten ist dabei stark von den jeweils verwendeten Behältern sowie dem Zweck bzw. der Umgebung abhängig, in der die entsprechenden Behälter eingesetzt und deren Aufenthaltsort und/oder Verschlussstellung abgefragt und/oder prognostiziert werden sollen bzw. soll.

Nachfolgend werden einzelne Ausführungsformen der vorliegenden Erfindung anhand lediglich schematischer Zeichnungen beispielhaft dargestellt.

Es zeigen:
Fig. 1: eine Vorstufe eines Behälters zum Einsatz mit dem erfindungsgemäßen Verfahren;
Fig. 2: einen der Vorstufe gemäß Fig. 1 entsprechenden Behälter in einer geöffneten Stellung;
Fig. 3: einen Behälter mit Führungsmitteln;
Fig. 4a: eine beispielhafte Anwendung des erfindungsgemäßen Verfahrens in einer ersten Situation;
Fig. 4b: eine beispielhafte Anwendung des erfindungsgemäßen Verfahrens in einer beispielhaften zweiten, abgewandelten Situation;
Fig. 4c: eine beispielhafte Anwendung der erfindungsgemäßen Behälter und des erfindungsgemäßen Verfahrens in einer weiteren beispielhaften dritten, abgewandelten Situation.
Fig. 4d: eine beispielhafte Anwendung der erfindungsgemäßen Behälter und des erfindungsgemäßen Verfahrens in einer weiteren beispielhaften vierten, abgewandelten Situation.

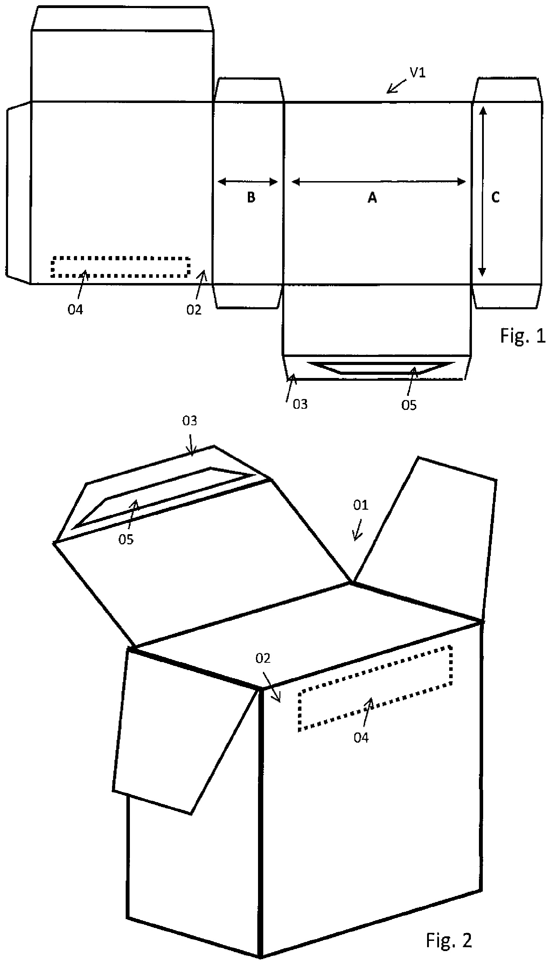

Fig. 1 zeigt zur besseren Veranschaulichung eine Vorstufe V1 eines Behälters. Die Vorstufe V1 kann beispielsweise aus Karton oder einem Karton aufweisenden Verbundmaterial bestehen. Die Vorstufe V1 lässt sich mit oder ohne Anwendung von entsprechenden Adhäsionsmitteln so verformen, dass ein Behälter entsteht, der eine Quaderform mit den Abmessungen A x B x C aufweist, wobei ein Teil der Vorstufe V1 einen ersten Behälterteil 02 und ein anderer Teil einen zweiten Behälterteil 03 bildet bzw. bilden wird. Wie bereits in Fig. 1 erkenntlich, sind dabei an dem den ersten Behälterteil 02 bildenden Teil der Vorstufe V1 eine Nahfeldantenne und ein damit verbundener RFID-Chip 04 angeordnet. Die punktierte Darstellung in Fig. 1 deutet dabei an, dass die Nahfeldantenne und der damit verbundene RFID-Chip 04 auf der nicht dargestellten Unterseite der Vorstufe V1 oder alternativ im Material der Vorstufe V1 angeordnet sind. Die Nahfeldantenne kann zudem durch ein Druckverfahren auf der Vorstufe V1 angeordnet bzw. angebracht werden. Des Weiteren ist in der Fig. 1 dargestellt, dass der zweite Behälterteil 03 als Lasche ausgebildet ist und im Bereich des zweiten Behälterteils 03 eine Fernfeldantenne 05 mit dem zweiten Behälterteil 03 verbunden ist.

Der in Fig. 2 dargestellte Behälter entspricht im Wesentlichen dem Resultat nach dem Formen der Vorstufe V1 der Fig. 1, jedoch in einer geöffneten Stellung. Der Behälter 01 weist dementsprechend auf einer Innenseite des Behälters 01 ein an dem ersten Behälterteil 02 angeordneten RFID-Chip und eine damit verbundene Nahfeldantenne 04 auf, wobei die innenliegende Anordnung wie bereits in Fig. 1 durch die punktierte Darstellung verbildlicht wird. Zudem ist auch die Fernfeldantenne 05 dargestellt, die an dem zweiten Behälterteil 03 des Behälters 01 angeordnet ist. Wie aus der Fig. 2 ersichtlich ist, erfordert das Überführen des Behälters 01 aus der dargestellten geöffneten Stellung in die nicht dargestellte geschlossene Stellung eine Relativbewegung des ersten Behälterteils 02 zum zweiten Behälterteil 03. Gleiches gilt umgekehrt ebenfalls für den Übergang aus der geschlossenen Stellung des Behälters 01 in die geöffnete Stellung.

Wie der Fig. 2 gleichfalls leicht entnehmbar ist, kommt der zweite Behälterteil 03 bei einer Überführung des Behälters 01 in die geschlossene Stellung im weitesten Sinne planparallel zur Ebene des ersten Behälterteils 02 zur Anlage. Dies gilt insbesondere, wenn in dem Behälter 01 eine entsprechende Ware oder dergleichen enthalten ist. Neben der im Wesentlichen parallelen Anordnung der beiden Behälterteile sind die Fernfeldantenne 05 sowie der RFID-Chip und die damit verbundene Nahfeldantenne 04 auf den dann gegenüberliegenden Behälterteilen 03 und 02 so zueinander angeordnet, dass beim Erreichen der geschlossenen Stellung des Behälters 01 die Nahfeldantenne und die Fernfeldantenne 05 in einen derart engen räumlichen Abstand und eine gleichzeitig derart wohldefinierte Relativposition zueinander gelangen, dass eine kontaktlose elektromagnetische Kopplung in Form einer kapazitiven Kopplung oder in Form einer induktiven Kopplung aufkommt. Dazu sind die jeweiligen kapazitiven und/oder induktiven Eigenschaften der Nahfeldantenne und der Fernfeldantenne 05 so aufeinander abgestimmt, dass eine Kopplung überhaupt entstehen bzw. aufrechterhalten werden kann.

Dabei ist die Fernfeldantenne 05 auf dem zweiten Behälterteil 03 gegebenenfalls so angeordnet, dass sich die Fernfeldantenne in der geschlossenen Stellung des Behälters 01 im Inneren des Behälters 01 befindet. Abweichend von der in der Fig. 2 dargestellten Anordnung der Fernfeldantenne 05 auf dem zweiten Behälterteil 03 und der Anordnung des RFID-Chips und der damit verbundenen Nahfeldantenne 04 auf dem ersten Behälterteil 02 ist gleichermaßen auch die umgekehrte bzw. vertauschte Anordnung auf den jeweiligen Behälterteilen möglich.

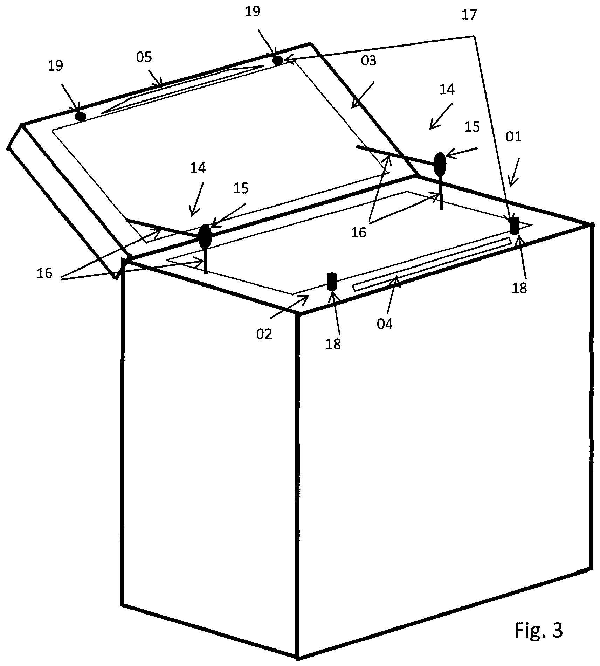

Fig. 3 zeigt eine gegen über Fig. 2 abgewandelte Ausführungsform eines entsprechenden Behälters 01. Die beiden Behälterteile 03, 02 sind dabei zusätzlich über die Führungsmittel 14 miteinander verbunden. Die Führungsmittel 14 weisen jeweils ein Drehgelenk 15 und zwei an den jeweiligen Seiten des Drehgelenks 15 radial zum Drehmittelpunkt verlaufende Führungsstreben 16 auf, die wiederum drehbar jeweils am ersten Behälterteil 02 und am zweiten Behälterteil 03 gelagert sind. Die Führungsmittel 14 sorgen für eine Führung der Behälterteile 02, 03 beim Übergang des Behälters 01 zwischen der geöffneten Stellung und der geschlossenen Stellung, da sie die mögliche Relativbewegung der Behälterteile 02, 03 einschränken bzw. vorgeben. Zu diesem Zweck können beispielsweise auch das Drehgelenk 15 sowie die drehbare Anordnung der Führungsstreben 16 an den Behälterteilen mit entsprechenden jedoch in der Fig. 3 nicht dargestellten Anschlägen ausgestattet sein, die die Relativbewegung der Behälterteile 02, 03 weiter einschränken. Zudem zeigt die Fig. 3 ein zusätzliches Paar Führungsmittel 17, welche jeweils aus eine Nase 18 an dem ersten Behälterteil 02 und eine dazugehörige und entsprechend dimensionierten Ausnehmung 19 im zweiten Behälterteil 03 aufweisen. Beim endgültigen Übergang des Behälters 01 in die geschlossene Stellung greift die jeweilige Nase 18 in die Ausnehmung 19 ein und gibt damit die Relativposition des ersten Behälterteils 02 zum zweiten Behälterteil 03 vor. Die Führungsmittel 14, 17, wie in Fig. 3 beispielhaft dargestellt unterstützen damit die zur Herstellung und Aufrechterhaltung der kontaktlosen elektromagnetischen Kopplung notwendige präzise Ausrichtung zwischen erstem und zweitem Behälterteil 02,03 in der geschlossenen Stellung.

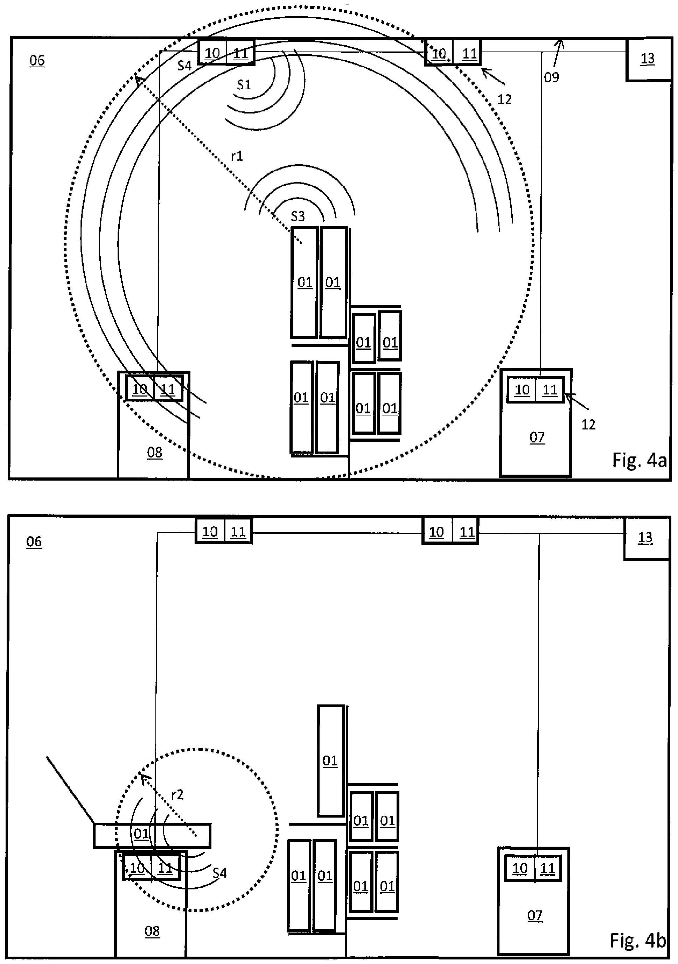

Fig. 4a zeigt zum Beispiel eine Verkaufs- bzw. Einzelhandelsräumlichkeit 06, in der eine Vielzahl von Produkten in entsprechenden Behältern ausgestellt bzw. angeboten wird. Zudem befinden sich in der Räumlichkeit 06 ein Kassenbereich mit einer Kasseneinrichtung 07 sowie ein Service- bzw. Beratungsbereich mit einem entsprechenden Service- oder Beratungstisch 08.

Außerdem sind in der Räumlichkeit 06 im Deckenbereich 09 jeweils zwei Sendeeinheiten 10 und zwei Empfangseinheiten 11 angeordnet, wobei jeweils eine Sendeeinheit 10 und eine Empfangseinheit 11 als kombinierte Sende- und Empfangseinheit 12 ausgebildet sind. Gleichzeitig sind im Bereich der Kasseneinrichtung 07 sowie im Bereich des Service- oder Beratungstisches 08 ebenfalls kombinierte Sende- und Empfangseinheiten 12 angeordnet. Die insgesamt vier Sende- und Empfangseinheiten 12 sind jeweils mit einer Datenverarbeitungsanlage 13 verbunden. Wie in der Fig. 3a dargestellt, sind die Behälter 01 allesamt in einer geschlossenen Stellung in einem Regal in der Verkaufsräumlichkeit 06 angeordnet.

Im Weiteren wird schematisch der Ablauf des erfindungsgemäßen Verfahrens anhand lediglich eines einzelnen in der Fig. 4a dargestellten Behälters 01 skizziert. In einem ersten Verfahrensschritt S1 sendet beispielsweise eine der beiden im Deckenbereich 09 angeordneten kombinierten Sende- und Empfangseinheiten 12 ein Signal aus. In einem darauffolgenden, zeichnerisch nicht weiter illustrierten Verfahrensschritt empfängt die mit dem RFID-Chip verbundene Nahfeldantenne eines Behälters 01 das Signal. In einem weiteren Verfahrensschritt S3 überträgt in dem in Fig. 3a dargestellten Beispiel die Fernfeldantenne des Behälters 01 ein Antwortsignal mit einer ersten Reichweite r1 in der Verkaufsräumlichkeit 06 ab. In einem weiteren Verfahrensschritt S4 empfangen alle kombinierten Sende- und Empfangseinheiten 12, die innerhalb eines Radius der Reichweite r1 von dem Behälter 01 entfernt sind, das entsprechende Antwortsignal. Der Empfang des Antwortsignals erfolgt im Beispiel der Fig. 3a mit allen kombinierten Sende- und Empfangseinheiten 12 mit Ausnahme der Sende- und Empfangseinheit 12 im Bereich der Kasseneinrichtung 07. Der entsprechende Empfang des Antwortsignals wird zwischen den kombinierten Sende- und Empfangseinheiten 12 und der Datenverarbeitungsanlage 13 kommuniziert und entsprechend weiterverarbeitet.

Aus der Darstellung der Fig. 4a ist leicht ersichtlich, dass eine entsprechende Änderung des Aufenthaltsortes eines oder mehrerer der Behälter 01 eine entsprechende Veränderung hinsichtlich des Empfangs der Antwortsignale für die jeweiligen kombinierten Sende- und Empfangseinheiten 12 zur Folge hätte, so dass insbesondere bei einer wiederholten oder ununterbrochen wiederholten Ausführung des vorgeschlagenen Verfahrens eine permanente Abfrage sowie gegebenenfalls auch eine vorausschauende Prognose des Aufenthaltsorts der Behälter 01 ermöglicht wird.

Die in Fig. 4b leicht abgewandelte Situation unterscheidet sich von der Situation in Fig. 4a lediglich darin, dass einer der Behälter 01 aus dem Regal der Verkaufsräumlichkeit 06 entnommen wurde und im Bereich des Service- oder Beratungstisches 08 in eine geöffnete Stellung überführt wurde. Dementsprechend wird in Reaktion auf das Empfangen eines entsprechenden Signals seitens einer Sendeeinheit 10 einer kombinierten Sende- und Empfangseinheit 12 der in der geöffneten Stellung befindliche Behälter 01 mittels des an ihm angebrachten RFID-Chip mit verbundener Nahfeldantenne ein Antwortsignal generieren und mittels der Nahfeldantenne übertragen.

Die Kommunikation mit der Sende- und/oder Empfangseinheit erfolgt in diesem Fall über die Nahfeldantenne und nicht über die Fernfeldantenne, da in der geöffneten Stellung des Behälters 01 die Fernfeldantenne und die Nahfeldantenne derart weit voneinander entfernt sind, dass keine kontaktlose elektromagnetische Kopplung zwischen der Fernfeldantenne und der Nahfeldantenne mehr möglich ist. Das Antwortsignal des Behälters 01 weist dementsprechend eine zweite Reichweite r2 auf. Folglich kann im Verfahrensschritt S4, in dem die Überprüfung des Empfangs eines Antwortsignals mittels der kombinierten Sende- und Empfangseinheiten 12 erfolgt, nur die kombinierte Sende- und Empfangseinheit 12 im Bereich des Service- oder Beratungstisches 08 das Antwortsignal des geöffneten Behälters 01 empfangen und dementsprechend eine positive Meldung über den Empfang des Antwortsignals erstellen und an die Datenverarbeitungsanlage 13 weiterleiten.

Ein wichtiger Vorteil des erfindungsgemäßen Verfahrens wird beim Vergleich der Fig. 4a und 4b unter der Annahme deutlich, dass die Fig. 4a und 3b eine Situation in zeitlicher Abfolge darstellen, in der die Situation der Fig. 4b nach der Situation 4a eintritt. Daraus folgt, dass bei einem wiederholten Durchlaufen bzw. Anwenden des vorgeschlagenen Verfahrens zunächst beide Empfangseinheiten 11 im Deckenbereich 09 und die Empfangseinheit 11 im Bereich des Beratungs- oder Servicetisches 08 das Antwortsignal des Behälters 01 empfangen und anschließend nur die letztgenannte Empfangseinheit 11 im Bereich des Beratungs- oder Servicetisches 08 das Antwortsignal des Behälters 01 empfängt. Durch eine entsprechende Programmierung der Datenverarbeitungsanlage 13 kann erreicht werden, dass eine solche Veränderung des Empfangs von Antwortsignalen als unkritisch eingeschätzt wird. In anderen Worten ausgedrückt bedeutet dies, dass gerade im Bereich des Beratungs- oder Servicetisches 08 oftmals eine Öffnung der Behälter durch oder zumindest im Beisein von entsprechend legitimiertem Personal und unter deren Beaufsichtigung erfolgt. Folglich besteht nicht die Gefahr, dass der Inhalt des Behälters 01 zum Zweck eines Diebstahls aus dem in der geöffneten Stellung befindlichen Behälter 01 entnommen werden kann.

Ganz allgemein erlaubt die Veränderung hinsichtlich des Empfangs des Antwortsignals also eine Aussage nicht nur hinsichtlich des Aufenthaltsorts des Behälters 01, sondern zusätzlich auch noch hinsichtlich seiner Verschlussstellung.

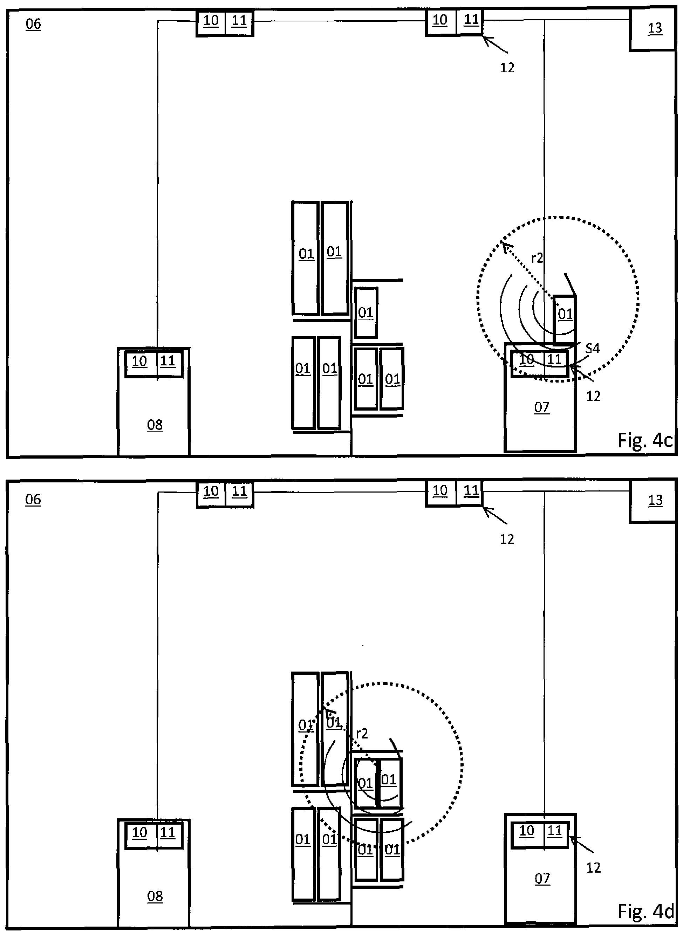

Die in Fig. 4c dargestellte abgewandelte Situation entspricht von der grundlegenden Situation her derjenigen der Fig. 4b. Hier ist ein Behälter 01 in den Bereich der Kasseneinrichtung 07 überführt und zudem in die geöffnete Stellung gebracht worden. Derartige Vorgänge sind im Kassenbereich ohne Weiteres üblich, beispielsweise um die Vollständigkeit des Inhalts des Behälter 01 vor Verkaufsabwicklung sicherzustellen bzw. zu überprüfen. Auch in der Situation der Fig. 4c überträgt der entsprechende Behälter 01 als Reaktion auf ein Signal über lediglich die Nahfeldantenne ein Antwortsignal mit der reduzierten Reichweite r2 ab, die wiederum lediglich von der kombinierten Sende- und Empfangseinheit 12 im Bereich der Kasseneinrichtung 07 wahrgenommen und entsprechend an die Datenverarbeitungsanlage 13 kommuniziert und dort weiterverarbeitet werden kann.

Wie auch in der Fig. 4b kann der Zustand des Behälters 01 im Beispiel der Fig. 4c bei einer entsprechenden Programmierung der Datenverarbeitungsanlage als unkritisch eingeschätzt werden, da, wie vorausgehend beschrieben, das Öffnen eines Behälters im Bereich der Kasseneinrichtung 07 üblich ist.

Nicht in einer der Fig. 4a bis 4c dargestellt, könnte beispielsweise eine Veränderung des Empfangs von Antwortsignalen ausgehend von der Situation der Fig. 3a alternativ als kritisch eingeschätzt werden, wobei anschließend zu einem bestimmten Zeitpunkt ein Antwortsignal nur noch von beiden Empfangseinheiten 11 im Bereich der Decke 09 der Verkaufsräumlichkeiten 06 und zusätzlich von der Empfangseinheit 11 im Bereich der Kasseneinrichtung 07 wahrgenommen wird und zu einem noch späteren Zeitpunkt schließlich ein Antwortsignal noch von der in Fig. 3a im rechten Bereich der Decke 09 angeordneten Empfangseinheit 11 und der im Bereich der Kasseneinrichtung 07 angeordneten Empfangseinheit 11 erfasst bzw. empfangen wird. Dies könnte darauf hinweisen, dass ein ungeöffneter Behälter 01 bzw. ein Behälter in der ungeöffneten Stellung zum Zweck eines Diebstahls aus der Verkaufsräumlichkeit 06 entwendet werden soll.

Ebenfalls als kritisch anzusehen ist die in Fig. 4d dargestellte Situation, in der im Bereich des Regals der Verkaufsräumlichkeit 06 ein Behälter 01 in die geöffnete Stellung gebracht wird oder gebracht worden ist und das Antwortsignal mit der zweiten Reichweite r2 von keiner der Empfangseinheiten 11 mehr empfangen werden kann. In den beiden letztgenannten Situationen bzw. beim Übergang in die beiden letztgenannten Situationen kann vorgesehen sein, dass durch eine entsprechende Programmierung der Datenverarbeitungsanlage diese eine entsprechende Ausgabe an einer Ausgabeeinheit erzeugt, um auf die Möglichkeit eines Diebstahls oder eines versuchten Diebstahls hinzuweisen.

## Patentansprüche

1. Verfahren zur Abfrage einer Verschlussstellung und/oder eines Aufenthaltsortes von zumindest einem verschließbaren Behälter (01) umfassend die Verfahrensschritte
a) Aussenden eines Signals mittels einer ersten Sendeeinheit (10) (S1);
b) Empfangen des Signals mit einer mit einem RFID-Chip verbundenen Nahfeldantenne (04) des Behälters (01);
c) Generieren eines Antwortsignals durch den RFID-Chip und übertragen des Antwortsignals, wobei in der geschlossenen Stellung des Behälters (01) eine kontaktlose elektromagnetische Kopplung zwischen der mit dem RFID-Chip verbundenen Nahfeldantenne (04), welche an dem ersten oder zweiten Behälterteil (02, 03) angeordnet ist, und einer an dem jeweils anderen ersten oder zweiten Behälterteil (02, 03) angeordneten Fernfeldantenne (05) besteht und das Antwortsignal mit einer ersten Reichweite zur Kommunikation mit einer Empfangseinheit (11) übertragen wird und in der geöffneten Stellung des Behälters (01) ein Antwortsignal mit einer zweiten Reichweite zur Kommunikation mit einer Empfangseinheit (11) übertragen wird (S3);
d) Überprüfung des Empfangs von Antwortsignalen mittels zumindest einer Empfangseinheit (11) (S4).

2. Verfahren nach Anspruch 1,
**dadurch gekennzeichnet,**
**dass** die mittels des RFID-Chips generierten Antwortsignale als charakteristische Antwortsignale eines jeweiligen Behälters (01) oder zumindest eines jeweiligen Behältertyps generiert werden.

3. Verfahren nach Anspruch 1 oder 2,
**dadurch gekennzeichnet,**
**dass** die Verfahrensschritte a) - d) periodisch wiederholt werden, wobei insbesondere mittels einer zumindest mit einer Empfangseinheit (11) verbundenen Datenverarbeitungsanlage (13) eine zeitliche Veränderung der Antwortsignale erfasst, insbesondere gespeichert, wird.

4. Verfahren nach einem der Ansprüche 1 bis 3,
**dadurch gekennzeichnet,**
**dass** die Datenverarbeitungsanlage die zeitliche Veränderung der Antwortsignale auswertet und basierend auf der Auswertung eine Prognose über den Aufenthaltsort und/oder die Verschlussstellung des zumindest eines Behälters (01) für einen aktuellen und/oder einen zukünftigen Zeitpunkt erstellt.

5. Verfahren nach einem der Ansprüche 1 bis 4,
**dadurch gekennzeichnet,**
**dass** die Abfrage und/oder Prognose über den Aufenthaltsort und/oder die Verschlussstellung des zumindest eines Behälters (01) über eine Ausgabeeinheit der Datenverarbeitungsanlage (13) ausgegeben wird.

6. Verfahren nach einem der Ansprüche 1 bis 5,
**dadurch gekennzeichnet,**
**dass** das Senden der Signale und der Empfang der Antwortsignale mit zumindest einer kombinierten Sende- und Empfangseinheit (12) erfolgen.

## Claims

1. A method for retrieving a shut position and/or the position of at least one closable container (01), comprising the method steps
a) sending a signal by means of a first sending unit (10) (S1);
b) receiving the signal with a near field antenna (04) of the container (01), said antenna being connected to an RFID chip;
c) generating a response signal by way of the RFID chip and transmitting the response signal, wherein, in the closed position of the container (01), a noncontact electromagnetic coupling exists between the near field antenna (04) which is connected to the RFID chip, and which is arranged at the first or at the second container part (02, 03), and a far field antenna (05) being arranged at the other one of the first and second container parts (02, 03), respectively, and wherein the response signal is transmitted with a first range for communicating with a receiving unit (11) and wherein, in the open position of the container (01), a response signal having a second range is transmitted for communicating with a receiving unit (11) (S3);
d) monitoring if response signals are received by means of at least one receiving unit (11) (S4).

2. The method according to claim 1,
**characterised in that**
the response signals having been generated by means of the RFID chip are generated as characteristic response signals of a respective container (01) or of at least one respective container type.

3. The method according to claim 1 or 2,
**characterised in that**
the method steps a) - d) are repeated periodically, a temporal change in the response signals being detected, in particular stored, in particular by means of a data processing installation (13) at least being connected to a receiving unit (11).

4. The method according to one of the claims 1 to 3,
**characterised in that**
the data processing installation evaluates the temporal change in the response signals and makes a prognosis regarding the position and/or regarding the shut position of the at least one container (01) for a current and/or a future point in time, based on the evaluation.

5. The method according to one of the claims 1 to 4,
**characterised in that**
the retrieval and/or prognosis regarding the position and/or regarding the shut position of the at least one container (01) are/is output via an output unit of the data processing installation (13).

6. The method according to one of the claims 1 to 5,
**characterised in that**
the signals are sent and the response signals are received with the aid of at least one combined sending and receiving unit (12).

## Revendications

1. Procédé d'interrogation d'un état de fermeture et/ou d'un emplacement d'au moins un conteneur (01) fermable, comprenant les étapes de procédé suivantes :
a) transmission d'un signal au moyen d'une première unité de transmission (10) (S1) ;
b) réception du signal au moyen d'une antenne à champ proche (04) du conteneur (01), ladite antenne (04) étant connectée avec une puce RFID ;
c) génération d'un signal de réponse par la puce RFID et transmission du signal de réponse, dans laquelle, dans la position fermée du conteneur (01), un couplage électromagnétique sans contact existe entre l'antenne à champ proche (04) connectée avec la puce RFID, ladite antenne (04) étant disposée à la première ou deuxième partie du conteneur (02, 03), et une antenne à champ lointain (05) respectivement disposée à l'autre des première ou deuxième parties du conteneur (02, 03), et le signal de réponse est transmis avec une première portée pour communiquer avec une unité de réception (11) et, dans la position ouverte du conteneur (01), un signal de réponse est transmis avec une deuxième portée pour communiquer avec une unité de réception (11) (S3) ;
d) vérification de la réception de signaux de réponse au moyen d'au moins une unité de réception (11) (S4).

2. Procédé selon la revendication 1,
**caractérisé en ce que**
les signaux de réponse générés au moyen de la puce RFID sont générés en tant que signaux de réponse caractéristiques d'un conteneur (01) respectif ou au moins d'un type de conteneur respectif.

3. Procédé selon la revendication 1 ou 2,
**caractérisé en ce que**
les étapes a) à d) sont répétées périodiquement, un changement temporel des signaux de réponse étant détecté, notamment stocké, en particulier au moyen d'une installation de traitement de données (13) connectée avec au moins une unité de réception (11).

4. Procédé selon l'une quelconque des revendications 1 à 3,
**caractérisé en ce que**
l'installation de traitement de données évalue le changement temporel des signaux de réponse et, se fondant sur ladite évaluation, crée un pronostic sur l'emplacement et/ou l'état de fermeture dudit au moins un conteneur (01) pour un moment actuel et/ou future.

5. Procédé selon l'une quelconque des revendications 1 à 4,
**caractérisé en ce que**
l'interrogation et/ou le pronostic sur l'emplacement et/ou l'état de fermeture dudit au moins un conteneur (01) sont sortis par une unité de sortie de l'installation de traitement de données (13).

6. Procédé selon l'une quelconque des revendications 1 à 5,
**caractérisé en ce que**
la transmission des signaux et la réception des signaux de réponse se font par au moins une unité de transmission et de réception (12) combinée.
